# FASCICULE DE BREVET EUROPEEN

(11) **EP 2 553 419 B1**
(45) Date de publication et mention de la délivrance du brevet: **10.01.2018**
(21) Numéro de dépôt: 11719322.7
(22) Date de dépôt: 31.03.2011
(51) Int. Cl.: G01M 17/04

(54) **PROCEDE DE CARACTERISATION ET D'AMELIORATION DU COMPORTEMENT D'UN VEHICULE**
VERFAHREN ZUR CHARAKTERISIERUNG UND OPTIMIERUNG DES VERHALTENS EINES FAHRZEUGES
METHOD FOR CHARACTERISING AND IMPROVING THE BEHAVIOUR OF A VEHICLE

(30) Priorité: 02.04.2010 FR 1052539
(43) Date de publication de la demande: 06.02.2013
(73) Titulaire: Compagnie Générale des Etablissements Michelin, 63000 Clermont-Ferrand (FR)
(72) Inventeur: DAILLIEZ, Thibault, F-63400 Chamalières (FR); EGERSZEGI, Christophe, F-63230 Mazaye (FR)
(74) Mandataire: Dequire, Philippe Jean-Marie Denis
(86) Numéro de dépôt international: PCT/FR2011/050728
(87) Numéro de publication internationale: WO 2011/121247

(56) Documents cités:
- EP-A1- 0 220 985
- DE-A1- 3 023 295
- US-A1- 2007 260 373
- US-A1- 2008 275 681

## Description

La présente invention concerne le domaine de l'amélioration du comportement routier des véhicules.

Lors de la conception d'un véhicule, le constructeur procède à plusieurs tests visant à améliorer le comportement du véhicule. Ces tests comprennent des tests, dits objectifs, permettant de qualifier quantitativement le comportement du véhicule et des tests, dits subjectifs, permettant de qualifier qualitativement le comportement du véhicule. Les tests subjectifs sont effectués par des essayeurs qui conduisent le véhicule et qualifient son comportement en fonction de leur impression.

Les tests objectifs comprennent notamment des tests de freinage, d'adhérence, de sécurité. Les tests subjectifs comprennent notamment des rubriques portant sur le comportement autour de la ligne droite, le comportement général et sur la sécurité active. Le comportement autour de la ligne droite regroupe des manoeuvres effectuées pour de faibles accélérations latérales du véhicule par exemple des manoeuvres dites de direction, de linéarité, d'agrément de conduite, de centrage, etc...

La rubrique portant sur le comportement autour de la ligne droite a notamment pour but de qualifier la réponse du véhicule en fonction d'une sollicitation généralement de faible amplitude d'angle au volant exercée par l'essayeur, c'est-à-dire par exemple comment le couple au volant ou le lacet du véhicule varient qualitativement et quantitativement en réponse à une variation d'angle au volant. Ainsi, par exemple, un véhicule présentant une réponse linéaire présente un comportement généralement jugé satisfaisant par l'essayeur alors qu'un véhicule dont la réponse est inexistante pour un faible angle de rotation du volant présente un comportement généralement jugé inacceptable pour l'essayeur.

Lorsque l'essayeur juge le comportement autour de la ligne droite du véhicule inacceptable, le véhicule est modifié puis ré-essayé par l'essayeur afin que ce dernier vérifie si le véhicule présente un comportement satisfaisant suite aux modifications apportées. Comme la cause du comportement inacceptable n'est pas connue par l'essayeur, les demandes de modifications apportées sont issues de l'expérience de ce dernier. Elles concernent de façon non exhaustive les pneumatiques, les roues, le système de direction, la géométrie et les éléments du dispositif de suspension. Les étapes énumérées ci-dessus sont répétées jusqu'à ce que le véhicule présente un comportement autour de la ligne droite satisfaisant pour l'essayeur.

La conception du véhicule est donc relativement longue et donc coûteuse.

Le document EP 0220985A1 présente un procédé de détection de l'usure d'un amortisseur.

Le document US 2007/200373 A1 présente un procédé pour des tests de longue durée de composants d'un véhicule, par exemple d'un amortisseur.

Dans ce qui suit, selon le contexte, le terme « roue » est pris soit dans un sens particulier, la roue est alors constituée d'un disque et d'une jante, soit dans un sens général qui correspond alors à l'ensemble monté constitué par une roue (disque et jante) et un pneumatique.

L'invention a pour but de fournir un procédé permettant d'améliorer rapidement le comportement autour de la ligne droite d'un véhicule.

A cet effet, l'invention a pour objet un procédé de caractérisation du comportement d'un véhicule donné comprenant une caisse, au moins une roue et au moins un dispositif de suspension reliant la roue à la caisse, **caractérisé en ce que** pour une valeur donnée d'un paramètre dont la variation modifie des frottements générés dans le dispositif de suspension :
(A) on applique au moins un cycle de sollicitation prédéterminé à chaque dispositif de suspension de façon à identifier des frottements présents dans le dispositif de suspension, et
(B) pour chaque dispositif de suspension, on détermine la valeur d'un indicateur relatif aux frottements caractérisés lors du cycle de sollicitation,
on ré-itère les étapes A et B en faisant varier le paramètre variable de façon à obtenir une variation de l'indicateur relatif aux frottements générés dans chaque dispositif de suspension en fonction d'au moins le paramètre variable, et
pour chaque dispositif de suspension, on détermine au moins un intervalle d'au moins une valeur du paramètre variable dans lequel l'indicateur relatif aux frottements est supérieur à un seuil prédéterminé pour le véhicule donné.

Les inventeurs à l'origine de l'invention ont trouvé, de manière surprenante, qu'il est possible de déphaser le roulis du lacet : ainsi pour une sollicitation au volant donnée, plus le mouvement de roulis est retardé, plus la mise en lacet du véhicule est rapide et meilleure est l'évaluation du comportement. Ainsi, les inventeurs à l'origine de l'invention ont pensé à figer le roulis d'un véhicule dont le comportement autour de la ligne droite était jugé inacceptable à cause d'une prise de lacet trop lente en agissant sur le dispositif de suspension du véhicule. En effet, le dispositif de suspension peut retarder le roulis du véhicule, du moins pendant la phase initiale de mise en lacet du véhicule. Afin d'empêcher le roulis du véhicule, les inventeurs ont donc pensé à introduire des frottements dans le dispositif de suspension de façon à bloquer momentanément la suspension lors de la phase initiale de mise en lacet du véhicule.

Ces frottements sont du type sec, c'est-à-dire qu'ils sont produits par le frottement de deux solides l'un au contact de l'autre.

Ces frottements peuvent être introduits directement dans le dispositif de suspension, par exemple par l'intermédiaire de moyens de génération de frottements intercalés entre la caisse et la roue. On fait varier la valeur des frottements en appliquant plusieurs valeurs d'un effort directement sur le dispositif de suspension. Cet effort constitue alors le paramètre variable.

Ces frottements peuvent également être introduits indirectement dans le dispositif de suspension, par exemple par l'intermédiaire d'un torseur additionnel d'efforts généré par la roue (au sens de l'ensemble monté constitué d'une roue et d'un pneumatique). Ce torseur additionnel appliqué au centre-roue génère un couple additionnel sur la roue qui modifie le point de fonctionnement du dispositif de suspension de façon à modifier les frottements générés entre les éléments de ce dernier. On peut faire varier la valeur des frottements en modifiant le torseur additionnel généré par la roue. Par exemple, dans le cas d'un dispositif de suspension de type Mac Phearson, les frottements sont induits par un effort tranchant qu'exerce le couple additionnel de la roue sur le dispositif de suspension.

Le procédé de caractérisation selon l'invention permet de déterminer comment modifier le véhicule et de quantifier les frottements de façon à rendre satisfaisant le comportement autour de la ligne droite.

Grâce au procédé selon l'invention, on détermine, pour le véhicule donné, comment varie l'indicateur relatif aux frottements en fonction du paramètre variable. Ainsi, on peut déterminer quelle valeur du paramètre doit être appliquée à la roue ou au dispositif de suspension pour induire dans le dispositif de suspension des frottements suffisamment élevés pour figer le dispositif de suspension lors de la phase initiale de mise en lacet du véhicule. L'indicateur relatif aux frottements pourra être une énergie dissipée par les frottements, une force de frottement ou bien encore un travail des frottements. Il s'agit d'une grandeur déterminable à partir des frottements générés dans le dispositif de suspension.

On notera que le procédé de caractérisation selon l'invention est applicable à tout véhicule muni d'un ou plusieurs dispositifs de suspension, quel que soit le type de dispositif de suspension utilisé : double triangulation, essieu multibras, pont oscillant ou Mac Phearson, etc..

En outre, le procédé de caractérisation est spécifique à chaque véhicule. En effet, le procédé selon l'invention a pour but d'identifier, dans le cas où les frottements sont introduits indirectement, la valeur du torseur additionnel centre-roue nécessaire pour figer la suspension lors de la phase initiale de mise en lacet du véhicule. Sur certains véhicules, plus cette valeur est élevée, plus les frottements sont élevés, plus la suspension est figée lors de la phase initiale de mise en lacet du véhicule et meilleur est le comportement du véhicule autour de la ligne droite. A l'inverse, sur d'autres véhicules, plus cette valeur est faible, plus les frottements sont élevés, plus la suspension est figée lors de la phase initiale de mise en lacet du véhicule et meilleur est le comportement du véhicule autour de la ligne droite. Sur encore d'autres véhicules, les frottements sont élevés uniquement sur un ou plusieurs intervalles et faibles en dehors de cet ou ces intervalles.

La caisse n'étant pas infiniment rigide en torsion, le comportement autour de la ligne droite d'un véhicule donné est également modifié d'une manière différente selon que l'on modifie les caractéristiques du train avant ou du train arrière. Ainsi, pour certains véhicules, le figeage des dispositifs de suspension arrières lors de la phase initiale de mise en lacet du véhicule n'a aucun effet sur le comportement autour de la ligne droite alors que pour d'autres, le figeage des dispositifs de suspension arrières lors de la phase initiale de mise en lacet du véhicule permet d'obtenir un véhicule présentant un comportement autour de la ligne droite satisfaisant.

Avantageusement, le véhicule donné comprend des première et deuxième roues et des premier et deuxième dispositifs de suspension reliant respectivement la première et la deuxième roue à la caisse.

De préférence, les deux roues forment des roues opposées d'un même essieu du véhicule.

Ainsi, on peut caractériser le comportement global du véhicule. Avantageusement, au cours du cycle de sollicitation :
- on déplace chaque roue selon une direction, dite verticale, sensiblement parallèle à la direction verticale de la roue, et
- pour chaque valeur du paramètre variable, on mesure une variation d'une force exercée sur chaque roue selon la direction verticale en fonction du déplacement de la roue selon la direction verticale.

De préférence, on déplace simultanément les première et deuxième roues selon la direction verticale dans des sens opposés. Ainsi, on simule le roulis du véhicule de façon à caractériser au mieux le comportement du véhicule lors de sa mise en lacet.

Pour chaque dispositif de suspension, on détermine la valeur de l'indicateur relatif aux frottements à partir d'une hystérèse d'un cycle du déplacement de chaque roue en fonction de la force exercée sur chaque roue selon la direction verticale.

L'hystérèse représente sensiblement l'énergie qui a été dissipée sous la forme des frottements induits directement ou indirectement dans le dispositif de suspension lors du cycle de sollicitation.

Dans un mode de réalisation, le paramètre variable comprend une force Fy appliquée à chaque roue selon une direction sensiblement parallèle à la direction transversale de la roue.

La force génère un couple additionnel autour d'un axe sensiblement parallèle à la direction longitudinale de la roue ce qui induit un effort, dit tranchant, dans chaque dispositif de suspension et donc modifie le point de fonctionnement du dispositif de suspension et peut ainsi induire des variations de frottements entre les éléments de chaque dispositif de suspension.

Avantageusement, on réalise les étapes A et B pour au moins une valeur de Fy, puis pour une valeur de Fy opposée à la précédente. Cela permet d'explorer de façon relativement complète les valeurs possibles du paramètre variable.

Dans un autre mode de réalisation, le paramètre variable comprend une valeur de déport de chaque roue.

Avantageusement, on réalise les étapes A et B pour au moins une valeur de déport égale à une valeur de déport initiale modifiée d'une variation donnée, puis pour une valeur de déport égale à la valeur de déport initiale modifiée d'une variation opposée à la précédente. Cela permet d'explorer de façon relativement complète les valeurs possibles du paramètre variable.

Dans un autre mode de réalisation, le paramètre variable comprend un angle d'inclinaison ou un angle de chasse du dispositif de suspension.

Selon une caractéristique optionnelle, le procédé étant réalisé sur un banc d'essai comprenant un bâti, la caisse est fixe par rapport au bâti. Ainsi, on détermine avec précision la valeur des frottements induits directement ou indirectement dans chaque dispositif de suspension.

L'invention a également pour objet un procédé d'amélioration du comportement d'un véhicule donné, **caractérisé en ce que :**
- on caractérise le comportement du véhicule donné en mettant en oeuvre un procédé de caractérisation tel que défini ci-dessus,
- on modifie le véhicule donné de façon à générer des frottements dans le dispositif de suspension de sorte que l'indicateur relatif aux frottements du véhicule modifié soit supérieur ou égal au seuil prédéterminé.

Comme précisé ci-dessus, on peut modifier le véhicule en agissant directement sur le dispositif de suspension, par exemple en ajoutant des moyens de génération de frottements, de façon à figer le roulis lors de la phase initiale de mise en lacet du véhicule. On peut également modifier le véhicule en agissant indirectement sur la suspension, par exemple en modifiant un couple que la roue exerce sur le dispositif de suspension.

Dans les deux cas, on modifie les frottements agissant dans le dispositif de suspension de façon à figer le roulis du véhicule lors de la phase initiale de sa mise en lacet. Les frottements peuvent avoir lieu entre deux éléments du dispositif de suspension formant glissières, entre deux éléments du dispositif de suspension mobiles au contact l'un de l'autre en rotation ou bien entre un élément du dispositif de suspension et un élément de la caisse ou bien encore entre un élément du dispositif de suspension et un élément de la roue.

On peut modifier le comportement du véhicule donné grâce aux caractéristiques optionnelles suivantes :
- L'ensemble monté comprenant une roue et un pneumatique, on modifie le pneumatique et/ou la roue. Les modifications du pneumatique comprennent notamment des modifications de l'architecture, par exemple la composition et la géométrie des différentes nappes le composant, ou des sculptures de sa bande de roulement. Les modifications de la roue comprennent notamment des modifications de la rigidité de la roue, du diamètre de la jante et du déport de roue (écuanteur).
- L'ensemble monté comprenant une roue avec un disque et une jante, et un pneumatique, on monte une bague entre la jante de la roue et le pneumatique. En ajustant les caractéristiques de la bague, notamment le côté de la roue sur lequel la bague est agencée ou la taille de la bague, il est possible d'ajuster la valeur du couple que l'ensemble monté exerce sur le dispositif de suspension.
- On modifie une géométrie d'au moins un dispositif de suspension du véhicule au moyen d'au moins un paramètre sélectionné parmi : le parallélisme du véhicule, le carrossage statique du véhicule, l'angle de chasse de chaque dispositif de suspension et l'angle d'inclinaison de chaque dispositif de suspension.
- Le véhicule comprenant un moyeu, on monte une cale entre le moyeu et la roue.

L'invention sera mieux comprise à la lecture de la description qui va suivre, donnée uniquement à titre d'exemple non limitatif et faite en se référant aux dessins dans lesquels :
- les figures 1 et 2 représentent la réponse en angle de lacet d'un véhicule donné en fonction de l'angle au volant ;
- les figures 3 et 4 représentent les variations du débattement de dispositifs de suspension en fonction du temps ;
- la figure 5 est une vue en coupe axiale d'une roue du véhicule, au sens particulier définit précédemment ;
- les figures 6 à 10 illustrent un procédé de caractérisation selon un premier mode de réalisation de l'invention appliqué au véhicule donné ;
- les figures 11A, 11B et 12 illustrent des résultats du procédé de caractérisation selon le premier mode de réalisation appliqué au véhicule donné ;
- les figures 13 et 14 sont des vues similaires à la figure 5 montrant deux modifications de la roue au cours d'un procédé de caractérisation selon un second mode de réalisation de l'invention appliqué au véhicule donné ;
- les figures 15 à 20 illustrent des résultats du procédé de caractérisation selon le premier mode de réalisation, appliqués à différents autres véhicules que celui concernant les figures 11A, 11B et 12 ;
- les figures 21 à 24 illustrent des modifications apportées au véhicule respectivement selon des premier, deuxième, troisième et quatrième modes de réalisation d'un procédé d'amélioration du véhicule.

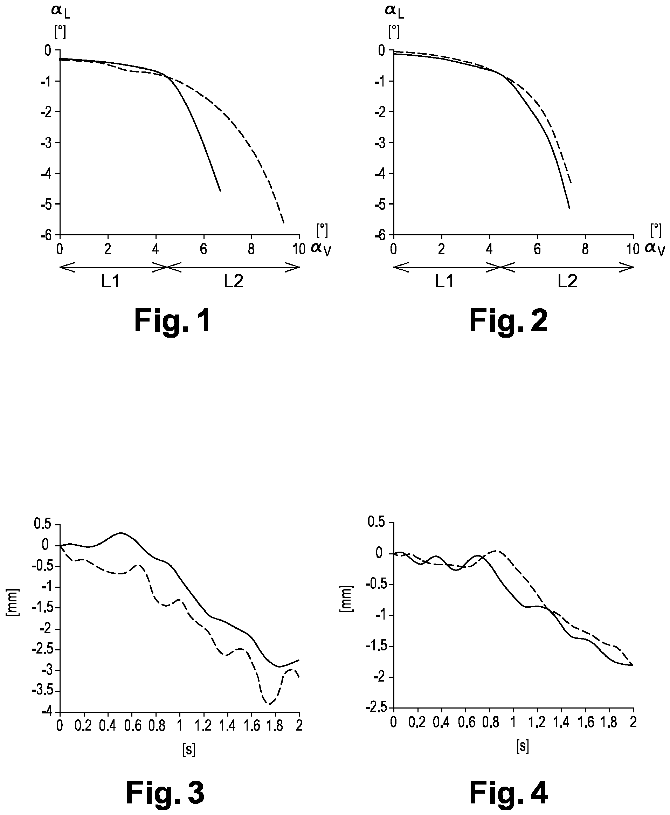

On a représente sur la figure 1 les variations de l'angle de lacet α_{L} en fonction de l'angle au volant α_{V} d'un véhicule donné V pour deux types de pneumatiques. Les courbes illustrées représentent la réponse du véhicule V muni respectivement de pneumatiques AA (trait plein) et BB (traits pointillés).

On distingue deux intervalles angulaires L1, L2 d'angles au volant α_{V}. Dans l'intervalle d'angles L1 variant de 0° à 4°, la réponse du véhicule V est quasiment nulle avec les pneumatiques AA ou BB. En effet, l'angle de lacet α_{L} est inférieur à 1° dans l'intervalle L1. Dans l'intervalle L2 variant de 4° à 10°, la réponse du véhicule V est retardée avec les pneumatiques BB. En effet, à la valeur d'angle de lacet α_{L} = 4°, le pneumatique AA a nécessité environ 2° de moins d'angle volant α_{V} que le pneumatique BB. Sur l'intervalle L2, le pneumatique AA présente donc une meilleure réponse que le pneumatique BB.

On a représenté sur la figure 2 le même véhicule V chaussé des mêmes pneumatiques AA et BB après avoir modifié le véhicule V de façon à figer le roulis du véhicule lors de la phase initiale de sa mise en lacet en y introduisant des frottements secs. Dans l'intervalle L2, la réponse du véhicule V équipé du pneumatique BB est désormais équivalente à celle du même véhicule V équipé du pneumatique AA, qui elle n'a pas évolué. Sur l'intervalle L2, les pneumatiques AA et BB présentent donc une réponse bonne et sensiblement équivalente.

Sur la figure 3, on a représenté, lors d'une mise en lacet du véhicule V :
- les variations en fonction du temps du débattement d'une suspension du véhicule V chaussé des pneumatiques AA et dont le comportement autour de la ligne droite a été jugé satisfaisant (trait plein),
- les variations en fonction du temps du débattement d'une suspension du véhicule V chaussé des pneumatiques BB et dont le comportement autour de la ligne droite a été jugé inacceptable (traits pointillés).

La suspension du véhicule V chaussé de pneumatiques AA est sensiblement inactive pendant une durée d'environ 0,5 s à compter du début de la sollicitation au volant si bien que le débattement est sensiblement nul sur cette durée. A l'inverse, la suspension du véhicule V chaussé des pneumatiques BB est active pendant cette durée si bien qu'un débattement d'environ 0,5 mm a lieu. Ce débattement de 0,5 mm provoque un roulis du véhicule V dès le début de la sollicitation au volant. Le roulis correspond à une inclinaison de la caisse du véhicule autour d'un axe sensiblement parallèle à l'axe longitudinal du véhicule V.

Les inventeurs à l'origine de l'invention ont trouvé, de manière surprenante, que plus le mouvement de roulis du véhicule, lorsque celui-ci amorce un virage, était retardé, plus rapide était la réponse de l'angle de lacet α_{L}, et meilleur était le comportement autour de ligne droite du véhicule V. En référence aux figures 1 et 2, cela revient à réduire autant que possible l'intervalle L1 dans lequel la réponse est quasiment nulle.

Ceci a été vérifié en référence à la figure 4 illustrant les variations du débattement de la suspension du véhicule V chaussé des pneumatiques AA (trait plein) et de la suspension du véhicule V chaussé des pneumatiques BB (traits pointillés) après que le véhicule V ait été modifié de façon à figer, grâce à l'introduction de frottements secs, les dispositifs de suspension pendant la durée de 0.7s environ à compter du début de la sollicitation volant. Dans les deux cas, les dispositifs de suspension du véhicule V sont sensiblement inactifs pendant la durée de 0.7s environ à compter du début de la sollicitation volant si bien que le débattement est sensiblement nul sur cette durée. Dans les deux cas, le véhicule V présente un comportement autour de ligne droite jugé satisfaisant par un essayeur.

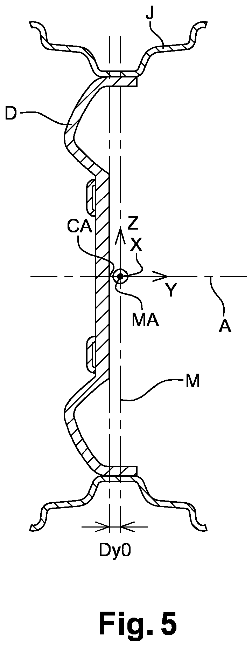

Sur la figure 5, on a représenté une roue de véhicule, au sens particulier défini précédemment, comprenant un disque D et une jante J.

On a également représenté sur la figure 5 des éléments géométriques identifiés habituellement sur une roue, à savoir le plan médian M de la roue, l'axe A de la roue, le point MA défini par l'intersection entre le plan médian M et l'axe A de la roue et le centre CA de la roue. Le centre CA est un point défini par l'intersection de l'axe A de la roue et d'une face du disque D destinée à venir en appui sur un moyeu portant la roue.

On a également représenté sur la figure 5 un repère géométrique dont l'origine est en MA, dit repère de roue. Ce repère comprends des axes X, Y et Z, orthogonaux entre eux, correspondant respectivement aux directions habituelles longitudinale (axe X), transversale (axe Y) et verticale (axe Z) d'une roue de véhicule.

On notera que, par convention, le sens positif de l'axe Y est dirigé de l'extérieur vers l'intérieur du véhicule et le sens négatif de l'axe Y est dirigé de l'intérieur vers l'extérieur du véhicule.

Lorsque deux roues telles que celle illustrée sur la figure 5 forment des roues opposées d'un même essieu, elles forment chacune une image spéculaire de l'autre. Il en est donc de même pour les repères de roue liés respectivement aux points MA des roues.

On notera également que, par convention, un couple d'axe sensiblement longitudinal est considéré comme positif lorsqu'il tend à diminuer l'angle de carrossage de la roue et comme négatif lorsqu'il tend à augmenter l'angle de carrossage de la roue. On rappelle que l'angle de carrossage d'une roue est l'angle que fait, dans un plan perpendiculaire au sol et contenant l'axe A de la roue, le plan médian M de la roue avec le plan médian du véhicule. On parle de contre carrossage (ou de carrossage négatif) lorsque les plans médian M des roues d'un même essieu se croisent au dessus du sol.

Enfin, on notera que le déport d'une roue Dy telle que celle représentée sur la figure 5 est la distance entre les points CA et MA. Sur la figure 5, le déport de roue a une valeur Dy0

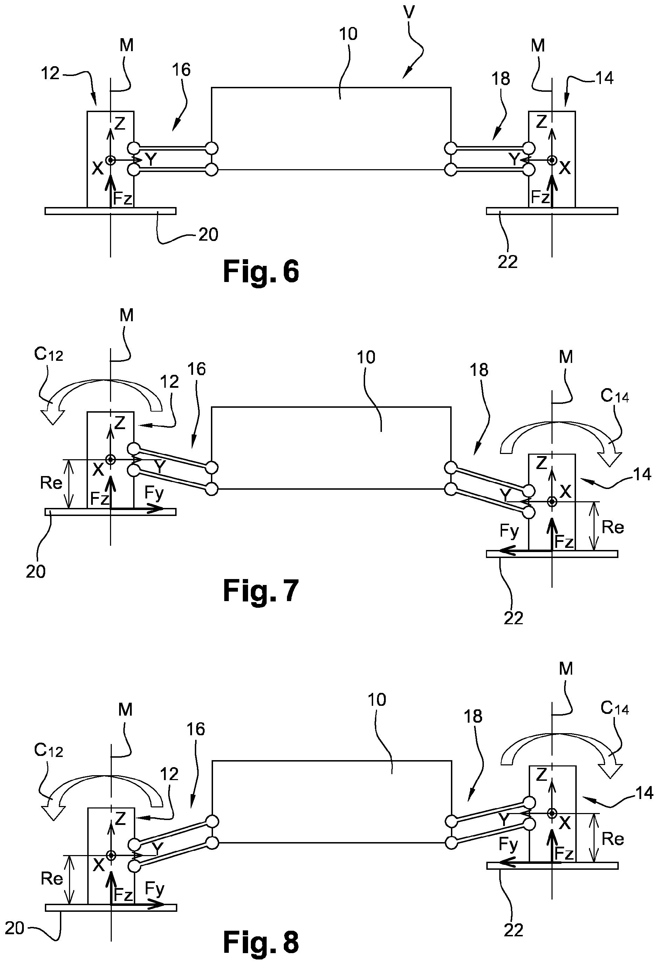

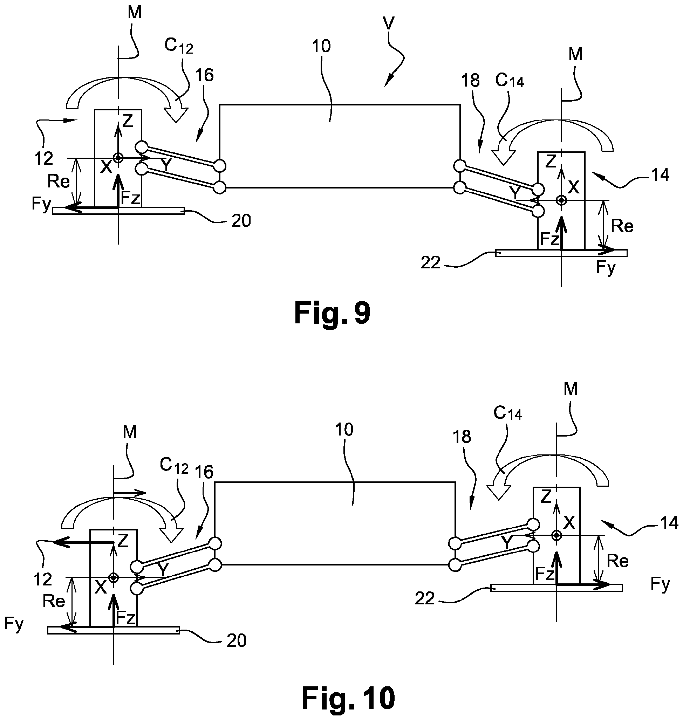

On décrira ci-dessous un procédé de caractérisation selon un premier mode de réalisation de l'invention. On fera notamment référence aux figures 6 à 12.

Le procédé de caractérisation est mis en oeuvre au moyen du véhicule V et d'un banc d'essai de type KNC (Kinematics and Compliance).

Le véhicule V comprend une caisse 10, des première et deuxième roues 12, 14, au sens général défini précédemment, et des premier et deuxième dispositifs 16, 18 de suspension reliant respectivement les première et deuxième roues 12, 14 à la caisse 10. Chaque dispositif 16, 18 est représenté schématiquement sur les figures 6 à 10 par un dispositif de suspension de type à double triangulation. En variante, chaque dispositif 16, 18 pourrait être du type Mac Phearson ou à pont oscillant, ou multibras, etc.

Les deux roues 12, 14 forment des roues opposées d'un même essieu (avant ou arrière) du véhicule. A chaque roue 12, 14, on associe un repère de roue tel que défini pour la roue représentée à la figure 5.

Le banc d'essai comprend des premier et deuxième supports mobiles 20, 22, portant respectivement les première et deuxième roues 12, 14, ainsi qu'un bâti fixe (non représenté). La caisse 10 est fixe par rapport au bâti.

Conformément au procédé de caractérisation, on sollicite chaque roue 12, 14 , et donc chaque dispositif de suspension 16,18, de façon à simuler le roulis subit par le véhicule V lors d'une sollicitation donnée du volant du véhicule. A cet effet, on impose, par l'intermédiaire des supports 20, 22, des cycles de déplacements verticaux des roues 12, 14 par rapport à la caisse 10 sensiblement parallèlement à l'axe Z des repères de roue. Les déplacements d'une roue se font dans un sens opposé aux déplacement de l'autre roue.

Les dispositifs de suspension 16, 18 sont sollicités lors des déplacement des roues 12, 14 ce qui génère des frottements dans ces dispositifs 16, 18.

Le procédé utilise un paramètre que l'on fait varier pour modifier ces frottements.

Dans le premier mode de réalisation du procédé de caractérisation de l'invention, le paramètre variable est une force Fy, appliquée à chaque roue, sensiblement parallèlement à l'axe Y du repère de roue.

Ainsi, dans le procédé selon le premier mode de réalisation de l'invention, simultanément aux déplacements des roues 12, 14, on applique, par l'intermédiaire des supports 20, 22, des première et deuxième forces Fy, de même module, respectivement sur les première et deuxième roues 12, 14.

Les première et deuxième forces Fy génèrent des premier et deuxième couples additionnels C12, C14 autour d'axes sensiblement parallèles à l'axe X des repères de roue. Dans ce premier mode de réalisation, chaque couple additionnel C12, C14 est défini par le produit Fy.Re où Re est le rayon écrasé de chaque roue 12, 14. Les couples additionnels C12, C14 varient en fonction du paramètre variable Fy.

La variation de la force Fy a pour effet de modifier le point de fonctionnement des dispositifs de suspension 16, 18 et par conséquent les frottements générés dans les dispositifs de suspension 16, 18.

On décrira ci-dessous plus en détail des cycles de sollicitation des roues 12, 14, et donc des dispositifs de suspension 16, 18, conformément au premier mode de réalisation du procédé de caractérisation.

Lors d'un premier cycle de sollicitation (figures 6 à 8), les forces Fy appliquées aux roues 12, 14 sont positives en les considérant chacune dans leur repère de roue respectif, de sorte que les couples additionnels C12, C14 sont appliqués aux roues dans des sens qui sont l'image spéculaire l'un de l'autre.

Par ailleurs, en se référant aux figures 6 à 8, on voit que lors du premier cycle de sollicitation:
- au cours d'une première étape, on déplace verticalement la roue 12 depuis une position de repos illustrée sur la figure 6 vers une position haute maximale illustrée sur la figure 7, et on déplace verticalement la roue 14 depuis une position de repos illustrée sur la figure 6 vers une position basse maximale illustrée sur la figure 7, puis
- au cours d'une deuxième étape, on déplace verticalement la roue 12 depuis la position haute maximale de la figure 7 vers une position basse maximale illustrée sur la figure 8, et on déplace verticalement la roue 14 depuis la position basse maximale de la figure 7 vers une position haute maximale illustrée sur la figure 8, et
- au cours d'une troisième étape, on déplace verticalement la roue 12 depuis la position basse maximale de la figure 8 vers la position de repos de la figure 6, et on déplace verticalement la roue 14 depuis la position haute maximale de la figure 8 vers la position de repos de la figure 6.

Lors d'un deuxième cycle de sollicitation (figures 6, 9 et 10), les forces Fy appliquées aux roues 12, 14 sont négatives en les considérant chacune dans leur repère de roue respectif, de sorte que les couples C12, C14 sont appliqués dans des sens inverses par rapport au premier cycle de sollicitation.

Par ailleurs, lors du second cycle de sollicitation on réalise des étapes de déplacement vertical des roues 12, 14 similaires à celles du premier cycle (voir figures 6, 9 et 10).

Chaque cycle sollicite chaque dispositif 16, 18 de façon à identifier des frottements présents dans chaque dispositif 16, 18.

Au cours de ces premier et deuxième cycles de sollicitation, on mesure la variation d'une force Fz exercée, parallèlement à l'axe Z de repère de roue, sur chaque roue 12, 14 par chaque support 20, 22 en fonction du déplacement de chaque roue 12, 14 selon cette direction verticale.

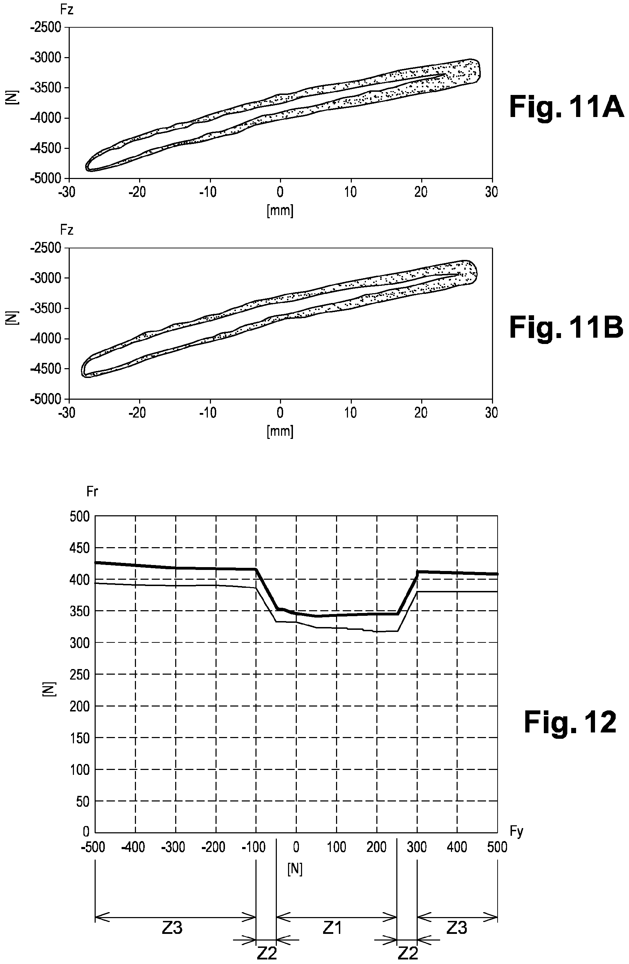

On ré-itère les premier et deuxième cycles en faisant varier le paramètre, ici la force Fy. On obtient alors les figures 11A et 11B qui illustrent les variations de la force Fz en fonction du débattement vertical respectivement de chaque roue 12, 14 pour l'ensemble des valeurs du paramètre variable Fy. Ainsi, pour chaque valeur de Fy, les variations prennent la forme d'un cycle d'hystérésis présentant une hystérèse. Pour chaque valeur de Fy, on détermine la valeur d'un indicateur relatif aux frottements caractérisés lors du cycle de sollicitation, ici à partir de l'hystérèse de chaque cycle. En l'espèce, l'hystérèse correspond à l'énergie dissipée dans chaque dispositif de suspension 16, 18 sous la forme de forces de frottement Fr générés dans chaque dispositif 16, 18, par exemple entre les éléments de chaque dispositif 16, 18. On a donc déterminé les variations de l'indicateur relatif aux frottements, ici la force de frottement Fr, en fonction du paramètre variable, ici Fy.

On obtient alors la figure 12 qui illustre la variation de l'indicateur relatif aux frottements, ici Fr, des frottements en fonction du paramètre variable, ici Fy, pour le véhicule V donné. Les variations de la force de frottement Fr de chaque dispositif 16 (trait fin), 18 (trait gras) sont sensiblement analogues et présentent trois intervalles Z1, Z2 et Z3. Dans l'intervalle Z1, dit de faibles frottements, correspondant à des valeurs de Fy comprises dans l'intervalle [-50; 250], la valeur de la force de frottement Fr de chaque dispositif 16, 18 est sensiblement égale à 325 N (dispositif 16) et 350 N (dispositif 18). Dans l'intervalle Z2, dit de transition, correspondant à des valeurs de Fy comprises dans les intervalles [-100; -50] et [250; 300], la valeur de la force de frottement Fr varie rapidement entre 325 et 380 N (dispositif 16) et entre 350 et 425 N (dispositif 18). Dans l'intervalle Z3, dit de forts frottements, correspondant à des valeurs de Fy comprises dans les intervalles [-500; -100] et [300; 500], la valeur de la force de frottement Fr de chaque dispositif 16, 18 est sensiblement égale à 380 N (dispositif 16) et 425 N (dispositif 18).

Le véhicule V caractérisé présente ici un seuil prédéterminé de l'indicateur relatif aux frottements de 375 N au-delà duquel le comportement autour de la ligne droite est satisfaisant.

Grâce au procédé de caractérisation selon l'invention, il est possible de prévoir que, dans l'intervalle Z1, le véhicule V présente un roulis relativement précoce lors de la phase initiale de mise en lacet car la force de frottement Fr est trop faible pour figer chaque dispositif 16, 18. On peut prévoir que l'essayeur jugera le comportement autour de la ligne droite inacceptable.

Il est possible de prévoir que, dans l'intervalle Z2, le véhicule V présente un roulis variable lors de la phase initiale de mise en lacet car la force de frottement Fr varie rapidement. On peut prévoir que l'essayeur jugera le comportement autour de la ligne droite non constant et donc inacceptable.

Enfin, il est possible de prévoir que, dans l'intervalle Z3, le véhicule présente un roulis relativement retardé lors de la phase initiale de mise en lacet car la force de frottement Fr est suffisamment élevée pour figer chaque dispositif 16, 18. On peut prévoir que l'essayeur jugera le comportement autour de la ligne droite satisfaisant.

Ainsi, le comportement autour de la ligne droite du véhicule V pourra être amélioré en figeant son roulis lors de la phase initiale de sa mise en lacet. Pour figer le roulis, on augmente la valeur de la force de frottement Fr au-delà d'un seuil prédéterminé, ici 375 N. Par exemple, on pourra modifier chaque pneumatique de façon à ce qu'il génère une force positive Fy de module supérieur à 300 N ou une force Fy négative de module supérieur à 100 N.

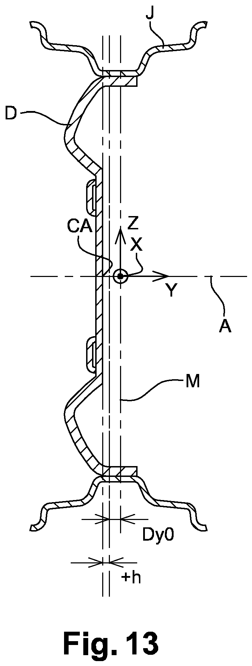

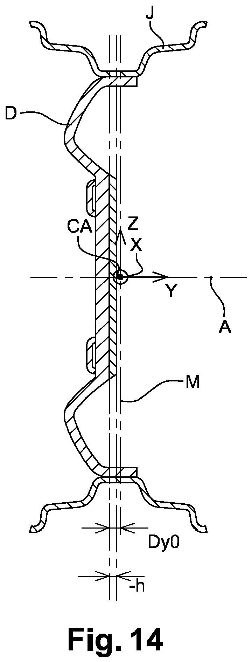

On décrira ci-dessous un procédé de caractérisation selon un second mode de réalisation de l'invention. On fera notamment référence aux figures 13 et 14 et aux références numériques déjà introduites dans les figures précédentes. Des références numériques identiques désigneront des éléments identiques ou analogues mutatis mutandis à ceux décrits dans les figures précédentes qui ne sont donc pas illustrés à nouveau.

Le procédé de caractérisation selon le second mode de réalisation est mis en oeuvre, comme pour le mode de réalisation précédent, au moyen du véhicule V et du banc d'essai de type KNC (Kinematics and Compliance).

Dans le procédé de caractérisation selon le second mode de réalisation, le paramètre variable est le déport Dy de chaque roue 12, 14 que l'on fait varier par exemple de +/- h à partir d'une valeur initiale Dy0 Ainsi, dans ce mode de réalisation, on n'applique pas de force Fy, telle que définie dans le mode de réalisation précédent mais on rapproche ou on éloigne le point d'application des efforts exercés par la roue sur le dispositif de suspension de la caisse. On génère ainsi des premier et deuxième couples additionnels C12, C14 autour d'axes sensiblement parallèles à l'axe X des repères de roue. Ces couples additionnels C12, C14 sont variables en fonction de la variation du paramètre Dy. Dans ce mode de réalisation, chaque couple additionnel C12, C14 est défini uniquement par le produit Fz.Dy où Dy= Dy0+/-h, h étant la variation de déport de chaque roue et Fz est la force exercée parallèlement à l'axe Z de repère de roue sur chaque roue 12, 14 par chaque support 20, 22.

En considérant h positif, pour pouvoir imposer une valeur de déport égale à Dy0 + h (voir figure 13), c'est-à-dire pour pouvoir rapprocher le point d'application des efforts de la roue de la caisse, on peut usiner le disque D de roue afin de modifier l'écuanteur de la roue.

Pour ramener le déport à sa valeur initiale ou pour pouvoir imposer une valeur de déport égale à Dy0 - h (voir figure 14), c'est-à-dire pour pouvoir éloigner le point d'application des efforts de la roue de la caisse, on peut ajouter une cale d'épaisseur appropriée.

On décrira ci-dessous plus en détail des cycles de sollicitation des roues 12, 14 conformément au second mode de réalisation du procédé de caractérisation.

Lors d'un premier cycle de sollicitation, on impose à chaque roue 12, 14 une valeur de déport égale à Dy0 + h (voir figure 13). Cette valeur Dy0 + h est obtenue par usinage du disque D. On génère ainsi des premier et deuxième couples additionnels C12, C14 autour d'axes sensiblement parallèles à l'axe X des repères de roue. Les couples additionnels C12, C14 sont appliqués aux roues dans des sens qui sont l'image spéculaire l'un de l'autre.

Par ailleurs, lors de ce premier cycle de sollicitation, on déplace verticalement les roues 12, 14 de façon similaire à ce qui a été décrit pour le procédé de caractérisation selon le premier mode de réalisation de l'invention.

Lors d'un second cycle de sollicitation, on impose à chaque roue 12, 14 une valeur de déport égale à Dy0 - h (voir figure 14). Cette valeur Dy0 - h est obtenue par ajout d'une cale de dimension appropriée. On génère ainsi des premier et deuxième couples additionnels C12, C14 appliqués dans des sens inverses par rapport au premier cycle de sollicitation.

Au cours de chaque cycle de sollicitation, on mesure la variation de la force Fz exercée sur chaque roue 12, 14 en fonction du déplacement vertical de chaque roue 12, 14.

On ré-itère les premier et deuxième cycles en faisant varier le paramètre, ici le déport Dy. On obtient alors les variations de la force Fz en fonction du débattement vertical respectivement de chaque roue 12, 14 pour l'ensemble des valeurs Dy. Ainsi, pour chaque valeur de Dy, les variations prennent la forme d'un cycle d'hystérésis présentant une hystérèse. Pour chaque valeur de Dy, on détermine la valeur d'un indicateur relatif aux frottements caractérisés lors du cycle de sollicitation, ici à partir de l'hystérèse de chaque cycle. On a donc déterminé les variations de l'indicateur relatif aux frottements, ici la force de frottement Fr, en fonction du paramètre variable, ici Dy.

Dans un troisième mode de réalisation non illustré, on applique un effort directement sur le dispositif de suspension, par exemple en serrant ou desserrant une contrainte exercée sur des moyens de génération de frottements agencés dans le dispositif de suspension de façon à faire varier la force de frottement Fr.

Dans les différents modes de réalisation décrits ci-dessus du procédé de caractérisation selon l'invention, ce procédé est appliqué à deux roues 12, 14 formant des roues opposées d'un même essieu du véhicule V. En variante, le procédé de caractérisation selon l'invention pourrait être appliqué à une seule roue du véhicule. Généralement, le véhicule comporte au moins deux essieux avant et arrière, si bien que l'on appliquera de préférence le procédé de caractérisation selon l'invention aux roues d'un premier essieu puis aux roues d'un second essieu.

En variante également, le paramètre variable pourrait comprendre un angle d'inclinaison ou un angle de chasse de la roue.

Quel que soit le mode de réalisation, les variations de la force de frottement Fr des dispositifs de suspension en fonction du paramètre variable sont spécifiques à chaque véhicule. Ainsi, chaque véhicule présente un comportement unique qu'il est nécessaire d'étudier.

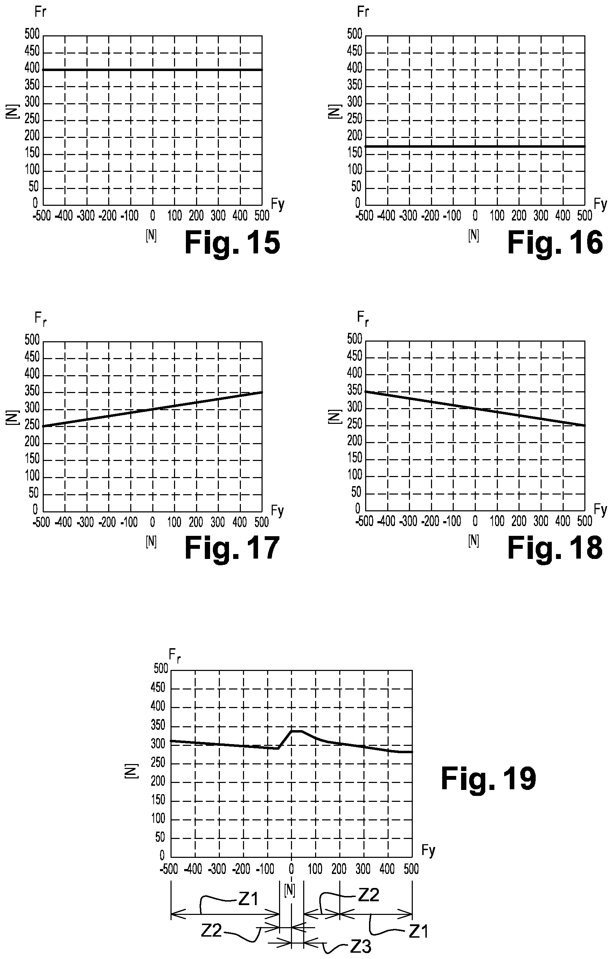

A titre d'exemple, on a représenté sur les figures 15 à 19 les variations de la force de frottement Fr en fonction de la force Fy pour une roue et un dispositif avant droit de six types de véhicules différents.

Les véhicules testés en référence aux figures 15 et 16 présentent une valeur de la force de frottement Fr constante quelle que soit la valeur de la force Fy. Ainsi, le comportement autour de la ligne droite du véhicule ne pourra être amélioré en modifiant le véhicule de façon à figer son roulis lors de sa mise en lacet. Il faudra entreprendre d'autres modifications du véhicule. Pour ces véhicules, il conviendra de déterminer la valeur adéquate de la force de frottement Fr permettant de figer suffisamment le roulis du véhicule lors de sa mise en lacet tout en ne raidissant pas trop chaque dispositif 16, 18, ce qui pourrait nuire au confort du véhicule. La valeur de la force de frottement Fr est donc déterminée selon un compromis entre le comportement et le confort du véhicule.

Le véhicule testé en référence à la figure 17 présente une valeur de la force de frottement Fr croissante avec la valeur de la force Fy. Ainsi, le comportement autour de la ligne droite du véhicule pourra être amélioré en figeant davantage son roulis lors de sa mise en lacet. Dans cet exemple, il est nécessaire d'augmenter la valeur de la force de frottement Fr au-delà d'un seuil prédéterminé, ici 325 N, pour figer le roulis. Ainsi, on pourra modifier le véhicule, par exemple en changeant de pneumatique, de façon à ce qu'il génère une force Fy de module 300 N et de sens positif par rapport à l'axe Y, c'est à dire de façon à ce que la force de frottement Fr soit supérieure à 325 N. Toutefois, comme précisé ci-dessus, il conviendra de déterminer la valeur adéquate de la force de frottement Fr de sorte que chaque dispositif 16, 18 ne soit pas trop raidit afin de trouver un bon compromis entre le comportement et le confort du véhicule.

Le véhicule testé en référence à la figure 18 présente à l'inverse une valeur de frottement décroissante avec la valeur de la force Fy. Dans cet exemple, il est nécessaire d'augmenter la valeur de la force de frottement Fr au-delà d'un seuil prédéterminé, ici 325 N, pour figer le roulis. Ainsi, on pourra modifier le véhicule, par exemple en changeant de pneumatique, de façon à ce qu'il génère une force Fy de module 300 N et de sens négatif par rapport à l'axe Y, c'est à dire de façon à ce que la force de frottement Fr soit supérieure à 325 N.

Les variations de la force de frottement Fr du véhicule testé en référence à la figure 19 présentent un intervalle Z1 de faibles frottements correspondant à des valeurs de Fy comprises ici dans les intervalles [-500; -50] et [200; 500], un intervalle Z2 de transition correspondant à des valeurs de Fy comprises dans les intervalles [-50; 0] et [50; 200] et un intervalle Z3 de forts frottements correspondant à des valeurs de Fy comprises dans l'intervalle [0; 50]. Dans cet exemple, il est nécessaire d'augmenter la valeur de la force de frottement Fr au-delà d'un seuil prédéterminé, ici 325 N, c'est-à-dire dans une zone de valeurs de Fr la plus favorable possible, pour figer le roulis. Ainsi, on pourra modifier le véhicule, par exemple en changeant de pneumatique, de façon à ce qu'il génère une force Fy de module faible compris entre 0 et 50 N et de sens positif selon l'axe Y, c'est à dire de façon à ce que la force de frottement Fr soit supérieure à 325 N.

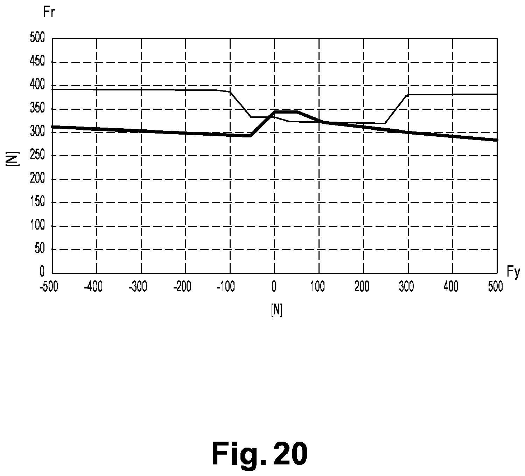

Ainsi, comme représenté sur la figure 20 qui illustre la superposition des courbes des figures 12 et 19, si on utilise les résultats du procédé de caractérisation du véhicule de la figure 12 au véhicule de la figure 19, le comportement du véhicule sera dégradé et pas amélioré. En effet, sur la figure 12, l'intervalle Z3 de forts frottements et donc correspondant à un comportement autour de la ligne droite satisfaisant pour l'essayeur, correspond à l'intervalle Z1 de faibles frottements du véhicule de la figure 19 et donc correspondant à un comportement inacceptable pour l'essayeur. Ainsi, si on modifie le pneumatique du véhicule de la figure 12 de façon à ce qu'il génère une force Fy de module 300 N et de sens positif selon l'axe Y ou une force Fy de module 100 N et de sens négatif selon l'axe Y, on obtient un véhicule présentant un comportement autour de la ligne droite satisfaisant pour l'essayeur alors qu'en appliquant ces mêmes modifications au véhicule de la figure 19, on obtient un véhicule dont la force de frottement Fr des dispositifs de suspension est trop faible, donc présentant un roulis précoce lors de sa mise en lacet et donc un comportement autour de la ligne droite inacceptable pour l'essayeur.

Afin d'améliorer le comportement d'un véhicule donné, on peut aussi modifier le véhicule donné en ajoutant des moyens de génération de frottements dans au moins un dispositif de suspension. Les moyens de génération de frottements sont aptes à générer des frottements dans le dispositif de suspension de sorte que la force Fr soit supérieure ou égale au seuil prédéterminé, c'est-à-dire dans une zone favorable correspondant aux plus fortes valeurs de la force de frottement Fr pour le véhicule donné. Ainsi, on modifie le véhicule donné de façon à figer momentanément son roulis consécutivement à une sollicitation au volant.

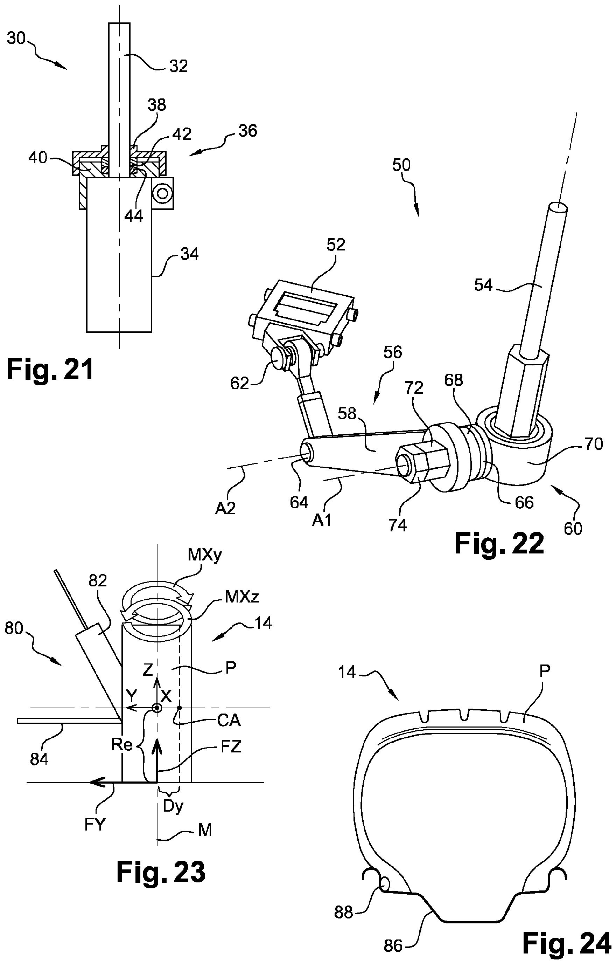

On a représenté sur la figure 21 un premier mode de réalisation d'un procédé d'amélioration en illustrant un dispositif de suspension 30 du véhicule donné après modification. Le dispositif 30 comprend une tige 32 et un fourreau 34. Le dispositif 30 comprend également un presse-étoupe 36 comprenant un écrou 38, un contre-écrou 40 solidaire du fourreau 34, une bague 42 en matériau déformable et frottant, avantageusement en étoupe ou en polyuréthane, et une bague conique 44. Sous l'effet du serrage de l'écrou 38, la bague étoupe 42 est déformée entre la bague conique 44 et l'écrou 40 ce qui augmente les frottements entre la bague étoupe 42 et la tige 32.

On a représenté sur la figure 22 un deuxième mode de réalisation du procédé d'amélioration en illustrant un autre type de dispositif 50 de suspension du véhicule donné après modification. Le dispositif 50 comprend un organe 52 de fixation du dispositif 50 à une roue du véhicule donné et un organe 54 de fixation du dispositif 50 à la caisse du véhicule. Le dispositif 50 comprend également des moyens d'articulation 56 des organes 52, 54 l'un par rapport à l'autre. Les moyens d'articulation 56 comprennent un bras 58 relié, d'une part, à l'organe 54 par une double liaison pivot 60 autour d'axes A1, A2 et, d'autre part, à l'organe 52 par un couple de rotules 62, 64. Le dispositif 50 est modifié en ajoutant une bague de friction 66 et une bague de découplage 68 à aiguilles agencées entre une embase 70 de l'organe 54 et le bras 58. De l'autre côté du bras 58, on ajoute un ressort 72 de précontrainte permettant de rattraper l'usure de la bague 66 ainsi qu'un écrou 74 de serrage du ressort 72, du bras 58 et des bagues 66, 68 contre l'embase 70. Ces éléments ajoutés sont montés sur l'axe A1. En variante, ils sont montés sur l'axe A2.

Afin d'améliorer le comportement d'un véhicule donné, on peut également modifier ce véhicule donné de façon à générer indirectement des frottements dans au moins un dispositif de suspension. La force de frottement générée sera supérieure ou égale au seuil prédéterminé pour le véhicule donné. Ainsi, on modifie le véhicule donné de façon à figer son roulis lors de sa mise en lacet.

On va maintenant décrire, en référence à la figure 23, des troisième et quatrième modes de réalisation du procédé d'amélioration en illustrant une roue 14 avant gauche du véhicule donné comprenant un pneumatique P. Le couple exercé sur l'axe X de repère de roue a un effet sur un dispositif de suspension 80. Afin d'améliorer le comportement du véhicule donné, on modifie le couple de façon à ce que la force de frottement Fr générée par le couple dans le dispositif de suspension est supérieure ou égale au seuil prédéterminé.

Afin de figer le roulis du véhicule donné lors de sa mise en lacet, on modifie le véhicule V de façon à modifier la valeur du couple résultant exercé par la roue 14 sur le dispositif 80 autour de l'axe X. Deux couples MXy et Mxz, participant à ce couple résultant, peuvent être modifiés.

Le premier couple MXy est défini par MXy = FY.Re où FY est la force exercée par le sol sur le pneumatique P en roulage parallèlement à la direction Y du repère de roue et Re est le rayon écrasé la roue 14.

Le deuxième couple MXz est défini par MXz = FZ.Dy où Fz est la force exercée par le sol sur le pneumatique P parallèlement à la direction Z du repère de roue et Dy est le déport de la roue.

Chaque couple MXy, MXz génère une contrainte sur le dispositif de suspension 80 ce qui entraîne l'apparition de frottements au sein de ce dispositif 80, par exemple au niveau de l'amortisseur 82, et donc un figeage du roulis lors de la phase initiale de mise en lacet du véhicule. Selon le type de chaque dispositif de suspension 16, 18, chaque couple MXy, MXz génère une contrainte qui entraînera plus ou moins de frottements dans le dispositif de suspension.

Dans le troisième mode de réalisation du procédé d'amélioration, on modifie la roue 14. En l'espèce, et comme représenté sur la figure 24, la roue 14 comprend une jante 86 sur laquelle est monté le pneumatique P. On modifie le véhicule donné en modifiant l'ensemble monté 14 en ajoutant une bague 88 entre la jante 86 et le pneumatique P. La bague 88 entraîne une dissymétrie du pneumatique P ce qui modifie principalement FY et donc MXy. A titre d'exemple, une bague 88 présentant un diamètre entre 4 et 5 mm permet d'augmenter ou de diminuer le couple MXy de 3 N.m.

Dans le quatrième mode de réalisation du procédé d'amélioration, on modifie le couple MXz en modifiant Dy. En l'espèce, le véhicule donné comprenant un moyeu, on monte une cale entre le moyeu et la roue 14. Ainsi, on augmente Dy et on augmente MXz. A titre d'exemple, une cale présentant une épaisseur de 1 mm permet de modifier le comportement autour de la ligne droite de façon à le rendre satisfaisant alors qu'il était inacceptable sans la cale.

L'invention ne se limite pas aux modes de réalisation précédemment décrits.

En effet, on pourra modifier les couples MXy et/ou MXz en modifiant la géométrie d'au moins un dispositif de suspension. Une faible variation du pincement ou de l'ouverture des roues génère un couple relativement important. Il est donc facile d'obtenir un couple suffisamment élevé pour figer le roulis du véhicule lors de sa mise en lacet tout en conservant un parallélisme compatible avec les autres exigences du constructeur.

En variante, on pourra modifier le pneumatique P ou des propriétés du pneumatique P telle que sa symétrie.

Dans chaque mode de réalisation décrit en référence à la figure 23, on modifie seulement MXy ou MXz. En variante, on modifiera MXy et/ou MXz et/ou on modifiera le véhicule en ajoutant des moyens de génération de frottements dans le dispositif de suspension.

En outre, on pourra modifier le véhicule de façon à modifier et/ou créer un couple autre que parallèle à la direction longitudinale de chaque roue.

## Revendications

1. Procédé de caractérisation du comportement d'un véhicule donné (V) comprenant une caisse (10), au moins une roue (12, 14) et au moins un dispositif de suspension (16, 18) reliant la roue (12, 14) à la caisse (10), **caractérisé en ce que** pour une valeur donnée d'un paramètre variable (Fy; Dy), utilisable pour l'amélioration du comportement du véhicule donné (V), et dont la variation modifie des frottements générés dans le dispositif de suspension (16, 18) :
(A) on applique au moins un cycle de sollicitation prédéterminé à chaque dispositif de suspension (16, 18) de façon à identifier des frottements présents dans le dispositif de suspension (16, 18),
(B) pour chaque dispositif de suspension (16, 18), on détermine la valeur d'un indicateur (Fr) relatif aux frottements caractérisés lors du cycle de sollicitation,
on ré-itère les étapes A et B en faisant varier le paramètre variable (Fy; Dy) de façon à obtenir une variation de l'indicateur (Fr) relatif aux frottements générés dans chaque dispositif de suspension (16, 18) en fonction d'au moins le paramètre variable (Fy; Dy), et
pour chaque dispositif de suspension (16, 18), on détermine au moins un intervalle (Z3) d'au moins une valeur du paramètre variable (Fy; Dy) dans lequel l'indicateur (Fr) relatif aux frottements est supérieur à un seuil prédéterminé pour le véhicule donné (V).

2. Procédé selon la revendication 1, dans lequel le véhicule donné (V) comprend des première et deuxième roues (12, 14) et des premier et deuxième dispositifs de suspension (16, 18) reliant respectivement la première et la deuxième roue (12, 14) à la caisse (10).

3. Procédé selon la revendication 2, dans lequel les deux roues (12, 14) forment des roues opposées d'un même essieu du véhicule (V).

4. Procédé selon l'une quelconque des revendications précédentes, dans lequel au cours du cycle de sollicitation:
- on déplace chaque roue (12, 14) selon une direction, dite verticale, sensiblement parallèle à la direction verticale (Z) de la roue, et
- pour chaque valeur du paramètre variable (Fy, Dy), on mesure une variation d'une force (Fz) exercée sur chaque roue (12, 14) selon la direction verticale en fonction du déplacement de la roue (12, 14) selon la direction verticale (Z).

5. Procédé selon les revendications 2 et 4 prises ensemble, dans lequel on déplace simultanément les première et deuxième roues (12, 14) selon la direction verticale (Z) dans des sens opposés.

6. Procédé selon la revendication 4 ou 5, dans lequel, pour chaque dispositif de suspension (16, 18), on détermine la valeur de l'indicateur (Fr) relatif aux frottements à partir d'une hystérèse d'un cycle du déplacement de chaque roue (12, 14) en fonction de la force (Fz) exercée sur chaque roue (12, 14) selon la direction verticale.

7. Procédé selon l'une quelconque des revendications précédentes, dans lequel le paramètre variable comprend une force Fy appliquée à chaque roue (12, 14) selon une direction sensiblement parallèle à la direction transversale (Y) de la roue.

8. Procédé selon la revendications 7, dans lequel, on réalise les étapes A et B
pour au moins une valeur de Fy, puis
pour une valeur de Fy opposée à la précédente.

9. Procédé selon l'une quelconque des revendications précédentes, dans lequel le paramètre variable (Fy; Dy) comprend une valeur de déport (Dy) de chaque roue (12, 14).

10. Procédé selon la revendications 9, dans lequel on réalise les étapes A et B
pour au moins une valeur de déport (Dy) égale à une valeur de déport initiale modifiée d'une variation donnée, puis
pour une valeur de déport (Dy) égale à la valeur de déport initiale modifiée d'une variation opposée à la précédente.

11. Procédé selon l'une quelconque des revendications précédentes, dans lequel le paramètre variable (Fy; Dy) comprend un angle d'inclinaison ou un angle de chasse du dispositif de suspension (16, 18).

12. Procédé selon l'une quelconque des revendications précédentes, dans lequel, le procédé étant réalisé sur un banc d'essai comprenant un bâti, la caisse (10) est fixe par rapport au bâti.

13. Procédé selon l'une des revendications 1 à 12 dans lequel le paramètre variable (Fy; Dy) comprend une valeur appartenant au groupe formé par :
- une force Fy appliquée à chaque roue (12, 14) selon une direction sensiblement parallèle à la direction transversale (Y) de la roue ;
- une valeur de déport (Dy) de chaque roue (12, 14),
- et un angle d'inclinaison ou un angle de chasse du dispositif de suspension (16, 18).

14. Pocédé selon l'une des revendications 1 à 13, dans lequel lesdits frottements générés dans le dispositif de suspension (16, 18) sont des frottements secs.

15. Procédé d'amélioration du comportement d'un véhicule donné (V), **caractérisé en ce que :**
- on caractérise le comportement du véhicule donné (V) en mettant en oeuvre un procédé de caractérisation selon l'une quelconque des revendications précédentes,
- on modifie le véhicule donné (V) de façon à générer des frottements dans le dispositif de suspension (16, 18) de sorte que l'indicateur (Fr) relatif aux frottements du véhicule (V) modifié soit supérieur ou égal au seuil prédéterminé.

16. Procédé selon la revendication 15, dans lequel, la roue (12, 14) comprenant un disque et une jante (86) et un pneumatique (P), on modifie le pneumatique (P) et/ou le disque et/ou la jante (86).

17. Procédé selon la revendication 15 ou 16, dans lequel, la roue (12, 14) comprenant un disque, une jante (86) et un pneumatique (P), on monte une bague (88) entre la jante (86) et le pneumatique (P).

18. Procédé selon l'une quelconque des revendications 15 à 17, dans lequel on modifie une géométrie d'au moins un dispositif (16, 18) de suspension du véhicule (V) au moyen d'au moins un paramètre sélectionné parmi le parallélisme du véhicule (V), le carrossage statique du véhicule (V), l'angle de chasse de chaque dispositif de suspension (16, 18) et l'angle d'inclinaison de chaque dispositif de suspension (16, 18).

19. Procédé selon l'une quelconque des revendications 15 à 18, dans lequel, le véhicule (V) comprenant un moyeu, on monte une cale entre le moyeu et la roue (12, 14).

## Patentansprüche

1. Verfahren zur Charakterisierung des Verhaltens eines gegebenen Fahrzeugs (V), das eine Karosserie (10), mindestens ein Rad (12, 14) und mindestens eine Aufhängungsvorrichtung (16, 18) enthält, die das Rad (12, 14) mit der Karosserie (10) verbindet, **dadurch gekennzeichnet, dass** für einen gegebenen Wert eines veränderlichen Parameters (Fy; Dy), der für die Verbesserung des Verhaltens des gegebenen Fahrzeugs (V) verwendbar ist und dessen Veränderung in der Aufhängungsvorrichtung (16, 18) erzeugte Reibungen ändert:
(A)mindestens ein vorbestimmter Beanspruchungszyklus an jede Aufhängungsvorrichtung (16, 18) angewendet wird, um in der Aufhängungsvorrichtung (16, 18) vorhandene Reibungen zu erkennen,
(B)für jede Aufhängungsvorrichtung (16, 18) der Wert eines Indikators (Fr) betreffend die Reibungen bestimmt wird, die im Beanspruchungszyklus charakterisiert werden,
die Schritte A-B wiederholt werden, indem der veränderliche Parameter (Fy; Dy) verändert wird, um eine Veränderung des Indikators (Fr) bezüglich der in jeder Aufhängungsvorrichtung (16, 18) erzeugten Reibungen abhängig mindestens vom veränderlichen Parameter (Fy; Dy) zu erhalten, und für jede Aufhängungsvorrichtung (16, 18) mindestens ein Bereich (Z3) mindestens eines Werts des veränderlichen Parameters (Fy; Dy) bestimmt wird, in dem der Indikator (Fr) bezüglich der Reibungen höher als eine vorbestimmte Schwelle für das gegebene Fahrzeug (V) ist.

2. Verfahren nach Anspruch 1, wobei das gegebene Fahrzeug (V) erste und zweite Räder (12, 14) und erste und zweite Aufhängungsvorrichtungen (16, 18) enthält, die das erste bzw. das zweite Rad (12, 14) mit der Karosserie (10) verbinden.

3. Verfahren nach Anspruch 2, wobei die zwei Räder (12, 14) gegenüberliegende Räder einer gleichen Achse des Fahrzeugs (V) bilden.

4. Verfahren nach einem der vorhergehenden Ansprüche, wobei während des Beanspruchungszyklus:
- jedes Rad (12, 14) gemäß einer so genannten senkrechten Richtung im Wesentlichen parallel zur senkrechten Richtung (Z) des Rads verschoben wird, und
- für jeden Wert des veränderlichen Parameters (Fy, Dy) eine Veränderung einer auf jedes Rad (12, 14) ausgeübten Kraft (Fz) gemäß der senkrechten Richtung abhängig von der Verschiebung des Rads (12, 14) gemäß der senkrechten Richtung (Z) gemessen wird.

5. Verfahren nach den Ansprüchen 2 und 4 zusammengenommen, wobei die ersten und zweiten Räder (12, 14) gleichzeitig gemäß der senkrechten Richtung (Z) in entgegengesetzte Richtungen verschoben werden.

6. Verfahren nach Anspruch 4 oder 5, wobei, für jede Aufhängungsvorrichtung (16, 18), der Wert des Indikators (Fr) bezüglich der Reibungen ausgehend von einer Hysterese eines Zyklus der Verschiebung jedes Rads (12, 14) abhängig von der auf jedes Rad (12, 14) gemäß der senkrechten Richtung ausgeübten Kraft (Fz) bestimmt wird.

7. Verfahren nach einem der vorhergehenden Ansprüche, wobei der veränderliche Parameter eine Kraft Fy enthält, die an jedes Rad (12, 14) gemäß einer Richtung im Wesentlichen parallel zur Querrichtung (Y) des Rads angewendet wird.

8. Verfahren nach Anspruch 7, wobei die Schritte A und B für mindestens einen Wert von Fy, dann für einen Wert von Fy entgegengesetzt zum vorhergehenden durchgeführt werden.

9. Verfahren nach einem der vorhergehenden Ansprüche, wobei der veränderliche Parameter (Fy; Dy) einen Versatzwert (Dy) jedes Rads (12, 14) enthält.

10. Verfahren nach Anspruch 9, wobei die Schritte A und B durchgeführt werden
für mindestens einen Versatzwert (Dy) gleich einem um eine gegebene Veränderung geänderten ursprünglichen Versatzwert, dann
für einen Versatzwert (Dy) gleich dem um eine Veränderung entgegengesetzt zur vorhergehenden geänderten ursprünglichen Versatzwert.

11. Verfahren nach einem der vorhergehenden Ansprüche, wobei der veränderliche Parameter (Fy; Dy) einen Neigungswinkel oder einen Nachlaufwinkel der Aufhängungsvorrichtung (16, 18) enthält.

12. Verfahren nach einem der vorhergehenden Ansprüche, wobei, da das Verfahren auf einem ein Gestell enthaltenden Prüfstand durchgeführt wird, die Karosserie (10) bezüglich des Gestells ortsfest ist.

13. Verfahren nach einem der Ansprüche 1 bis 12, wobei der veränderliche Parameter (Fy; Dy) einen Wert enthält, der zu der Gruppe gehört, die gebildet wird von:
- einer Kraft Fy, die an jedes Rad (12, 14) gemäß einer Richtung im Wesentlichen parallel zur Querrichtung (Y) des Rads angewendet wird;
- einem Versatzwert (Dy) jedes Rads (12, 14),
- und einem Neigungswinkel oder einem Nachlaufwinkel der Aufhängungsvorrichtung (16, 18).

14. Verfahren nach einem der Ansprüche 1 bis 13, wobei die in der Aufhängungsvorrichtung (16, 18) erzeugten Reibungen trockene Reibungen sind.

15. Verfahren zur Verbesserung des Verhaltens eines gegebenen Fahrzeugs (V), **dadurch gekennzeichnet, dass**:
- das Verhalten des gegebenen Fahrzeugs (V) charakterisiert wird, indem ein Charakterisierungsverfahren nach einem der vorhergehenden Ansprüche durchgeführt wird,
- das gegebene Fahrzeug (V) so geändert wird, dass Reibungen in der Aufhängungsvorrichtung (16, 18) erzeugt werden, so dass der Indikator (Fr) bezüglich der Reibungen des geänderten Fahrzeugs (V) höher als eine oder gleich einer vorbestimmten Schwelle ist.

16. Verfahren nach Anspruch 15, wobei, da das Rad (12, 14) eine Scheibe und eine Felge (86) und einen Luftreifen (P) enthält, der Luftreifen (P) und/oder die Scheibe und/oder die Felge (86) geändert werden.

17. Verfahren nach Anspruch 15 oder 16, wobei, da das Rad (12, 14) eine Scheibe, eine Felge (86) und einen Luftreifen (P) enthält, ein Ring (88) zwischen die Felge (86) und den Luftreifen (P) montiert wird.

18. Verfahren nach einem der Ansprüche 15 bis 17, wobei eine Geometrie mindestens einer Aufhängungsvorrichtung (16, 18) des Fahrzeugs (V) mittels mindestens eines Parameters geändert wird, der aus der Vorderradspur des Fahrzeugs (V), dem statischen Radsturz des Fahrzeugs (V), dem Nachlaufwinkel jeder Aufhängungsvorrichtung (16, 18) und dem Neigungswinkel jeder Aufhängungsvorrichtung (16, 18) ausgewählt wird.

19. Verfahren nach einem der Ansprüche 15 bis 18, wobei, da das Fahrzeug (V) eine Nabe enthält, ein Unterlegkeil zwischen die Nabe und das Rad (12, 14) montiert wird.

## Claims

1. Method for characterizing the behaviour of a given vehicle (V) comprising a body (10), at least one wheel (12, 14) and at least one suspension device (16, 18) linking the wheel (12, 14) to the body (10), **characterized in that**
for a given value of a variable parameter (Fy; Dy), usable for improving the behaviour of the given vehicle (V), the variation of which modifies friction generated in the suspension device (16, 18) :
(A) at least one predetermined stress cycle is applied to each suspension device (16, 18) so as to identify friction present in the suspension device (16, 18),
(B) for each suspension device (16, 18), the value of an indicator (Fr) relating to the friction **characterized in** the stress cycle is determined,
the steps A and B are repeated by varying the variable parameter (Fy; Dy) so as to obtain a variation of the indicator (Fr) relating to the friction generated in each suspension device (16, 18) according to at least the variable parameter (Fy; Dy), and
for each suspension device (16, 18), at least one interval (Z3) of at least one value of the variable parameter (Fy; Dy) is determined in which the indicator (Fr) relating to the friction is greater than a predetermined threshold for the given vehicle (V).

2. Method according to Claim 1, in which the given vehicle (V) comprises first and second wheels (12, 14) and first and second suspension devices (16, 18) respectively linking the first and the second wheels (12, 14) to the body (10).

3. Method according to Claim 2, in which the two wheels (12, 14) form opposite wheels of one and the same axle of the vehicle (V).

4. Method according to any one of the preceding claims, in which during the stress cycle:
- each wheel (12, 14) is displaced in a direction, called vertical, substantially parallel to the vertical direction (Z) of the wheel, and
- for each value of the variable parameter (Fy, Dy), a variation of a force (Fz) exerted on each wheel (12, 14) in the vertical direction is measured as a function of the displacement of the wheel (12, 14) in the vertical direction (Z).

5. Method according to Claims 2 and 4 taken together, in which the first and second wheels (12, 14) are displaced simultaneously in the vertical direction (Z) in opposite directions.

6. Method according to Claim 4 or 5, in which, for each suspension device (16, 18), the value of the indicator (Fr) relating to the friction is determined from a hysteresis of a cycle of the displacement of each wheel (12, 14) as a function of the force (Fz) exerted on each wheel (12, 14) in the vertical direction.

7. Method according to any one of the preceding claims, in which the variable parameter comprises a force Fy applied to each wheel (12, 14) in a direction substantially parallel to the transversal direction (Y) of the wheel.

8. Method according to Claim 7, in which, the steps A and B are performed
for at least one value of Fy, then
for a value of Fy opposite to the preceding value.

9. Method according to any one of the preceding claims, in which the variable parameter (Fy; Dy) comprises an offset value (Dy) of each wheel (12, 14).

10. Method according to Claim 9, in which the steps A and B are performed
for at least one offset value (Dy) equal to an initial offset value modified by a given variation, then
for an offset value (Dy) equal to the initial offset value modified by a variation opposite to the preceding variation.

11. Method according to any one of the preceding claims, in which the variable parameter (Fy; Dy) comprises an angle of inclination or a steering error angle of the suspension device (16, 18).

12. Method according to any one of the preceding claims, in which, if the method is performed on a test bench comprising a frame, the body (10) is fixed relative to the frame.

13. Method according to any one of claims 1 to 12, in which the variable parameter (Fy; Dy) comprises a value chosen in the group of:
- a force Fy applied to each wheel (12, 14) in a direction substantially parallel to the transversal direction (Y) of the wheel;
- an offset value (Dy) of each wheel (12, 14); and
- an angle of inclination or a steering error angle of the suspension device (16, 18).

14. Method according to any one of claims 1 to 13, in which said friction generated in the suspension device (16, 18) is of a dry type.

15. Method for improving the behaviour of a given vehicle (V), **characterized in that:**
- the behaviour of the given vehicle (V) is **characterized by** implementing a characterization method according to any one of the preceding claims;
- the given vehicle (V) is modified so as to generate friction in the suspension device (16, 18) so that the indicator (Fr) relating to the friction of the modified vehicle (V) is greater than or equal to the predetermined threshold.

16. Method according to Claim 15, in which, since the wheel (12, 14) comprises a disc and a wheel rim (86) and a tyre (P), the tyre (P) and/or the disc and/or the wheel rim (86) is/are modified.

17. Method according to Claim 15 or 16, in which, since the wheel (12, 14) comprises a disc, a wheel rim (86) and a tyre (P), a ring (88) is fitted between the wheel rim (86) and the tyre (P).

18. Method according to any one of Claims 15 to 17, in which a geometry of at least one suspension device (16, 18) of the vehicle (V) is modified by means of at least one parameter selected from the parallel alignment of the vehicle (V), the static rake of the vehicle (V), the steering error angle of each suspension device (16, 18) and the angle of inclination of each suspension device (16, 18).

19. Method according to any one of Claims 15 to 18, in which, since the vehicle (V) comprises a hub, a shim is mounted between the hub and the wheel (12, 14).
